# EUROPEAN PATENT APPLICATION

(11) **EP 1 081 097 A1**
(43) Date of publication of application: **07.03.2001**
(21) Application number: 00307117.2
(22) Date of filing: 18.08.2000
(51) Int. Cl.: C02F 1/52, C02F 1/56, C02F 1/68, C02F 101/20

(54) **Utilization of a coagulant/flocculant organic agent of vegetable origin to remove colloidal material from water**

(30) Priority: 27.08.1999 BR 9904020
(71) Applicant: Tanac S.A., 95780-000 Montenegro, RS (BR)
(72) Inventor: Lamb, Luiz Henrique, 95840-000 Triunfo, RS (BR); Decusati, Otavio Guimaraes, 95780-000 Montenegro, RS (BR)
(74) Representative: Daniels, Jeffrey Nicholas

(57) **Abstract**

Provided is a method for removing a contaminant material from water, which method comprises treating the water with a coagulant/flocculant organic agent of vegetable origin, wherein the contaminant material comprises a colloidal material, a metal, an organic material or an industrial residue, the agent comprises modified tannin produced from pyrochatechin tannin, and the agent is cationic.

## Description

The present invention refers to a method for removing colloidal material from water, involving the use of a coagulant/flocculant organic agent of vegetable origin.

For many years, the processes for purifying and clarifying water, for various applications, including human consumption, have been performed using inorganic salts, mainly aluminium and iron salts, acting as coagulant/flocculant agents for impurities.

We have now verified the possibility of treating drinking water, water for industrial uses, for boilers and cooling towers, for treating industrial effluents in general and for the treatment of domestic sewage, by using a synthetic coagulant/flocculant agent with organic and vegetable properties. The basic raw material for the production of this agent is pyrochatechin tannin, an aqueous extract of Acacia mearnsii bark, having cationic properties.

The present invention relates to a method for applying this agent, basically meant for the removal of colloidal matter as well as other contaminating substances, such as metals, organic matter or other industrial waste from water.

Accordingly, the present invention provides a method for removing a contaminant material from water, which method comprises treating the water with a coagulant/flocculant organic agent of vegetable origin, wherein the contaminant material comprises a colloidal material, a metal, an organic material or an industrial residue, the agent comprises modified tannin produced from pyrochatechin tannin, and the agent is cationic.

The present invention also provides use of a coagulant/flocculant organic agent of vegetable origin to remove a contaminant material from water, wherein the contaminant material comprises a colloidal material, a metal, an organic material or an industrial residue, the agent comprises modified tannin produced from pyrochatechin tannin, and the agent is cationic.

By means of comparative experiments with methods involving other inorganic or organic coagulant/flocculant agents, the present method showed greater efficiency and some features that distinguish it from them, such as the fact that during application there was no depletion of alkalinity in the water medium, there being no need for its correction to activate the flocculation agent. Thus, one of the stages normally used during the treatment is eliminated, corresponding to the use of alkalising agents, such as lime, for correcting pH (see Table 1).

Metallic salts, when acting as coagulant/flocculant agents, tend to increase the conductivity values of water. Modified tannins, because they are organic polymers of vegetable origin, do not cause such changes, so the conductivity values found in untreated water remaining unaltered. Besides not adding metals, such as aluminium, they also help to remove salts that contribute to the increase of conductivity.

One of the product's important features is its ability to promote chelates with the metals dissolved in the water; these chelates keep the metals immobilized next to the coagulation/flocculation agent, causing them to settle and allowing their removal together with the generated sludge. This ability is especially efficient when removing ferrous ions present in the water, allowing the substantially total removal of this contaminant.

The vegetable cationic flocculant in appraisal is effectively active in a broad pH range; contrary to normally used metallic salts, that require a fairly narrow range of pH for efficient activity. Table 2 shows the results obtained by varying the water's pH and the quantity of vegetable cationic coagulant agent necessary to keep this water's turbidity below 1 NTU (Nephelometric Turbidity Unit), starting with water with an initial turbidity of 40 NTUs.

Without being bound by theory, it is believed that the coagulation/flocculation process takes place in two different and consecutive stages. First of all, the coagulation phenomenon takes place through the simultaneous conduction of the colloidal particles present.

The chemical reaction process is fairly fast, taking place seconds after the coagulant is put in the water. The later stage, flocculation, is the agglomeration of the colloidal matter in suspension after coagulation, through light stirring by mechanical, chemical or hydraulic means, in the treatment of drinking or waste water.

The action of normally used coagulant/flocculant agents, metallic salts, is based on the disassociation of these salts, with the formation of metallic hydroxides. These metallic hydroxides will react with the colloidal particles present in the medium, the water to be treated, neutralizing these charges, causing a subsequent agglomeration, leading to settling and consequent removal of these contaminants from the water to be treated.

The fundamental difference of the proposed method is that the cationic coagulant/flocculant agent of vegetable origin does not need to hydrolyse with the medium to neutralize the charges of the colloidal matter present in the water, thus not altering the water's pH. The coagulation/flocculation phenomenon is caused by the direct reaction of the cationic fraction of its molecule with the charges present in the medium, destabilizing them, leading to their agglomeration, and settling.

Therefore, the present invention relates to the use of a synthetic coagulant/flocculant agent with organic and vegetable properties that can be directly applied, when in the pure liquid form, or in the form of a diluted solution, alone or combined with other agents, such as aluminium sulfate, ferric chloride, etc. and has its production process referred to in Brazilian Patent PI 8207498-4, property of Tanac SA.

**Table I**

| Water pH when treated with different coagulant/flocculant agents. | | | | | | | |
|---|---|---|---|---|---|---|---|
| Mg/liter flocculating agent | 0 | 5 | 7,5 | 10 | 15 | 20 | 30 |
| Vegetable Cationic Flocculant | 6,8 | 6,8 | 6,8 | 6,8 | 6,7 | 6,7 | 6,7 |
| Ferric Chloride | 6,8 | 6,6 | 6,5 | 6,3 | 6,2 | 6,1 | 5,9 |
| Aluminum Sulfate | 6,8 | 6,7 | 6,6 | 6,4 | 6,3 | 6,2 | 6,1 |

**Table 2**

| Variation of the amount of Vegetable Cationic Flocculant mg/liter necessary to flocculate water with 40 NTUs of turbidity, resulting in treated water with a final turbidity of 1 NTU, in various pH ranges. | | | | | | |
|---|---|---|---|---|---|---|
| Water pH | 3 | 4 | 5 | 6 | 7 | 8 |
| Vegetable Cationic Flocculant mg/liter | 5 | 5 | 8 | 8 | 8 | 20 |

## Claims

1. A method for removing a contaminant material from water, which method comprises treating the water with a coagulant/flocculant organic agent of vegetable origin, wherein the contaminant material comprises a colloidal material, a metal, an organic material or an industrial residue, the agent comprises modified tannin produced from pyrochatechin tannin, and the agent is cationic.

2. A method according to claim 1, wherein the agent is applied directly to the water to be treated in liquid form, or in a diluted solution form, alone or combined with other agents, such as aluminium sulfate or iron chloride.

3. A method according to claim 1 or claim 2, wherein use of the agent does not substantially lower the pH of the treated water.

4. A method of according to claim 3, wherein alkalinizing agents are not used to correct the pH of the treated water.

5. A method according to claim 3 or claim 4, wherein the agent is capable of neutralizing the charges of the colloidal matter present in the water without hydrolysing in the water.

6. A method according to any preceding claim, wherein treatment with the agent does not substantially increase the electrical conductivity of the treated water.

7. A method according to any preceding claim, wherein the agent is capable of promoting the chelation of metal ions dissolved in the water to be treated.

8. A method according to any preceding claim, wherein substantially no ferrous ions remain in the water after treatment with the agent.

9. A method according to any preceding claim, wherein the agent is substantially active as a coagulant or flocculant at any pH between 3 and 8.

10. A method according to any preceding claim, wherein the agent is capable of initially promoting coagulation and subsequently flocculation of the colloidal matter present in the water.

11. A method according to any preceding claim, wherein the cationic fraction of the agent is capable of directly reacting with the charges present in the water, leading to the agglomeration and settling of the contaminant material.

12. Use of a coagulant/flocculant organic agent of vegetable origin to remove a contaminant material from water, wherein the contaminant material comprises a colloidal material, a metal, an organic material or an industrial residue, the agent comprises modified tannin produced from pyrochatechin tannin, and the agent is cationic.
